# EUROPÄISCHE PATENTSCHRIFT

(11) **EP 4 409 195 B1**
(45) Veröffentlichungstag und Bekanntmachung des Hinweises auf die Patenterteilung: **03.09.2025**
(21) Anmeldenummer: 22793426.2
(22) Anmeldetag: 23.09.2022
(51) Int. Cl.: F17C 13/04

(54) **KRYOTANK**
CRYOGENIC TANK
RÉSERVOIR CRYOGÉNIQUE

(30) Priorität: 27.09.2021 AT 9121 U
(43) Veröffentlichungstag der Anmeldung: 07.08.2024
(73) Patentinhaber: VENTREX Automotive GmbH, 8010 Graz (AT)
(72) Erfinder: ZIEGER, Johannes, 8321 Hofstätten an der Raab (AT)
(74) Vertreter: Wildhack & Jellinek Patentanwälte GmbH
(86) Internationale Anmeldenummer: PCT/EP2022/076470
(87) Internationale Veröffentlichungsnummer: WO 2023/046879

(56) Entgegenhaltungen:
- DE-A1- 102008 063 563
- DE-A1- 102018 210 002
- DE-C2- 4 104 766

## Beschreibung

### Stand der Technik

Die Erfindung betrifft einen Kryotank, insbesondere einen Kryotank zur Aufnahme von kryogenem Wasserstoff und zur Versorgung eines Verbrauchers mit gasförmigen Wasserstoff nach dem Oberbegriff des Anspruches 1.

Ein Kraftstoffversorgungssystem für kryogene Kraftstoffe wie z.B. LNG (Erdgas) oder LH₂ (Wasserstoff) umfasst im Allgemeinen einen doppelwandigen Behälter mit einem Innentank zur Aufnahme des Kraftstoffs, einen Außentank mit einer dazwischen angeordneten Isolation zur Verringerung des Wärmeeintrags in den Innentank, einer Innentankaufhängung zur Positionierung des Innentanks im Außentank, einen wärmeisolierten Einfüllstutzen (Johnson-Cox-Kupplung) am Außentank zur Aufnahme der fahrzeugseitigen Betankungskupplung mit Ventilen, Schaltkomponenten zur Steuerung des Massenstroms bei der Betankung, Schaltkomponenten zur Steuerung des Massenstroms bei der Entnahme, Schaltkomponenten zur Begrenzung des Innentankdrucks, einen Wärmetauscher und dazugehörige Schaltkomponenten zur Aufrechterhaltung des Innentankdrucks, einen Wärmetauscher zur Erwärmung des Kraftstoffs für den Verbraucher, Leitungen zur Verbindung der einzelnen Schaltkomponenten und Wärmetauscher und Sensoren zur Steuerung der Massenströme, zur Überwachung und zur Diagnose.

Derartige Kraftstoffspeichersysteme für kryogene Kraftstoffe sind u.a. aus DE 19546618, DE 102009012380, DE 19945462, DE 102008063563, DE 4041170, DE 00001981744, DE 4320556, WO 2009/071208 und dgl. bekannt, wobei sich die einzelnen Anmeldungen z.B. hinsichtlich des Betankungsvorgangs, d.h. Betankung mit oder ohne Rückführung von Gas aus dem Innentank zur Tankstelle, hinsichtlich des Druckniveaus, d.h. unterkritische und/oder überkritische Betankung und Speicherung des Kraftstoffs, hinsichtlich des Verschaltungssystems, d.h. Art, Anzahl und Anordnung der Schaltkomponenten für die Betankung, für die Entnahme und zur Druckbegrenzung voneinander entscheiden. Ein gemeinsames Merkmal aller Anmeldungen ist die Anordnung der kryogenen Schaltkomponenten zur Steuerung des Betankungsvorgangs und zur Steuerung des Entnahmevorgangs in einem wärmeisolierten Raum, vorzugsweise im Zwischenraum zwischen dem Innentank und dem Außentank oder in einer von dem Außentank trennbaren oder fest mit dem Außentank verbundenen wärmeisolierten Ventilbox, die mit dem Leitungssystem zum Innentank verbunden ist. Durch diesen Aufbau ist sichergestellt, dass bei der Betankung und bei der Entnahme keine Verflüssigung der Luft erfolgt.

Die Nachteile von Kryo-Schaltventilen wie z.B. in EP 1801478 gezeigt, sind der enorme Platzbedarf des Ventils zur Vermeidung von Verflüssigung oder Kondensation an der Außenseite, die hohen Kosten des einzelnen Kryoventils und des Kraftstoffversorgungssystems bei Verwendung mehrerer Ventile, die Kosten für das Einschweißen des Ventilgehäuses und das Anschweißen der Verbindungsleitungen am Ventil und die Prüfung der Schweißnähte, die Störung der Isolation und die Verminderung der Isolationswirkung bei einer Anordnung des bzw. der Kryoventile im Isolationsraum zwischen dem Innentank und dem Außentank und das Gewicht.

### Technische Aufgabe

Die Aufgabe der Erfindung besteht darin, die Nachteile des Standes der Technik zu vermeiden, insbesondere werden durch die Vermeidung von Bauteilen, durch die Vermeidung von Arbeitsschritten und durch die Vermeidung von Prüfvorgängen das Gewicht, die Abmessungen und die Kosten einer kryogenen Kraftstoffversorgungsanlage verringert.

Erfindungsgemäß wird die vorliegende Aufgabe durch Bereitstellung eines Kryotanks mit den Merkmalen des Anspruches 1 gelöst.

### Technische Lösung

Die Aufgabe wird durch die Anordnung der Kryoventile bzw. der kryogenen Schaltorgane zur Steuerung des Kraftstoffstroms bei der Betankung und/oder zur Steuerung des Kraftstoffstroms bei der Entnahme in unterschiedlichen Ausführungsvarianten in einem unmittelbar oder mittelbar mit dem Einfüllstutzen in Verbindung stehenden Bauraum gelöst, wobei alle Kryoventile nach Entfernung der fahrzeugseitigen Betankungskupplung entnehmbar sind, d.h. die Anordnung der Kryoventile erfolgt im Einfüllstutzen oder in einem über den Einfüllstutzen zugängigen und in Betankungsrichtung vor oder nach dem Einfüllstutzen angeordneten Bauraum oder an bzw. in der fahrzeugseitigen Betankungskupplung. Die Aufgabe wird weiters durch den vorzugsweisen Einsatz von kryogenen Rückschlagventilen und wahlweise einem kryogenen Innentankdruckregelventil anstatt von kryogenen elektromechanischen, kryogenen elektropneumatischen oder kryogenen elektrohydraulischen Absperrventilen gelöst.

Der Einfüllstutzen des Kryotanks ist ein rohrförmiger Bauteil, dessen außentankseitiges Ende mit dem Außentank und dessen innentankseitiges Ende mit der Befülleitung und soweit vorhanden mit der Gasrückführleitung verschweißt ist. Die fahrzeugseitige Betankungskupplung ist am außentankseitigen Ende des Einfüllstutzens befestigt und erstreckt sich durch den rohrförmigen Mittelteil des Einfüllstutzens bis zum innentankseitigen Ende des Einfüllstutzens, wobei am innentankseitigen Ende des Einfüllstutzens eine Verbindung der korrespondierenden Leitungen erfolgt. Die fahrzeugseitige Betankungskupplung nimmt bei der Betankung die tankstellenseitige Betankungskupplung auf und umfasst Ventile für die Betankung. Der rohrförmige Mittelteil der Betankungskupplung ist mit geringer Wandstärke ausgeführt, um eine Kondensation oder Verflüssigung zu verhindern.

Die Kryoventile werden bevorzugt zu einem kompakten Ventilblock zusammengeführt, wobei bevorzugt der Ventilblock das Gehäuse für alle Schaltventile bildet und wobei bevorzugt Bohrungen im Ventilblock die geschweißten Leitungen nach dem Stand der Technik ersetzen und die einzelnen Schaltkomponenten verbinden. Durch den Aufbau verbindet bevorzugt eine am Ventilblock und am Innentank verschweißte Leitung den Ventilblock mit dem Innentank, die restlichen korrespondierenden Leitungen zwischen dem Ventilblock und dem Innentank sind jeweils durch ein Steck- oder Schraubsystem verbunden und innerhalb der geschweißten Leitung angeordnet.

Wahlweise sind innerhalb der geschweißten Leitung auch Leitungen des Druckhaltesystems für den Innentank und/oder Leitungen des Druckbegrenzungssystems für den Innentank angeordnet.

Wahlweise ist das Absperrventil zum Verbraucher am Ventilblock oder im Einfüllstutzen angeordnet.

Wahlweise sind die Ventile zur Begrenzung des Innentankdrucks am Ventilblock oder im Einfüllstutzen angeordnet.

Wahlweise sind die Ventile zur Aufrechterhaltung des Innentankdrucks am Ventilblock oder im Einfüllstutzen angeordnet.

Wahlweise ist der Wärmetauscher zur Erwärmung des Kraftstoffs für den Verbraucher am Ventilblock oder im Einfüllstutzen angeordnet.

Wahlweise umfasst der Ventilblock oder der Einfüllstutzen alle notwendigen Ventile des Kryotanks und nimmt wahlweise den Wärmetauscher zur Erwärmung des Kraftstoffs sowie die fahrzeugseitige Betankungskupplung auf.

Die Kryoventile bilden durch den kompakten Aufbau und die Anordnung eine handhabbare Baugruppe und vereinfachen die Montage und Vorprüfung.

Durch die Anordnung der kryogenen Schaltorgane in einem Bauraum, der über den Einfüllstutzen zugängig ist, kann jeder Ventilsitz bei Bedarf getauscht werden.

Durch die Anordnung der kryogenen Schaltorgane in einem Bauraum, der über den Einfüllstutzen zugängig ist, entfällt das Einschweißen der Gehäuse für die Schaltorgane in den Außentank und die Prüfung der Schweißnähte.

Durch die Anordnung der kryogenen Schaltorgane in einem Bauraum, der über den Einfüllstutzen zugängig ist, entfallen einzelne Verbindungsleitungen zwischen den Bauteilen sowie die Schweißungen und die Prüfungen der Schweißnähte.

Durch die Anordnung der kryogenen Schaltorgane in einem Bauraum, der über den Einfüllstutzen zugängig ist, sinkt das Risiko einer Abnahme der Isolationsgüte durch undichte Verbindungsstellen.

Durch die Anordnung der kryogenen Schaltorgane in einem Bauraum, der über den Einfüllstutzen zugängig ist, wird die Isolation nicht gestört und die Isolationswirkung verbessert.

Durch den Entfall der Gehäuse für die einzelnen Kryoventile sinkt das Gewicht des Kryotanks.

Durch die Anordnung der kryogenen Schaltorgane in einem Bauraum, der über den Einfüllstutzen zugängig ist, wird die Vereisungsgefahr verringert.

Durch die Anordnung der kryogenen Schaltorgane in einem Bauraum, der über den Einfüllstutzen zugängig ist, wird eine erhebliche Kostenreduktion durch den Entfall von Komponenten und durch den Entfall von Arbeits- und Prüfvorgängen erreicht.

Durch die Verwendung von Rückschlagventilen und Druckschaltern statt kryogener elektromechanischer bzw. elektropneumatischer oder elektrohydraulischer Absperrventile ist in der gesamten kryogenen Kraftstoffversorgungsanlage nur ein vorzugsweise elektromechanisches Absperrventil in Strömungsrichtung nach dem Wärmetauscher erforderlich.

### Figurenbeschreibung

Der erfindungsgemäße Kryotank sowie alternative Ausführungsvarianten werden in weiterer Folge anhand der Figuren erläutert.
Figur 1 zeigt einen erfindungsgemäßen Kryotank in einer bevorzugten Ausführungsform für eine einflutige Betankung mit einem Rückschlagventil.
Figur 2 zeigt den erfindungsgemäßen Kryotank in einer alternativen Ausführungsvariante für eine einflutige Betankung mit einem Rückschlagventil und einem Innentankdruckregelventil.
Figur 3 zeigt eine weitere alternative Ausführungsvariante des erfindungsgemäßen Kryotanks für eine zweiflutige Betankung mit einem Rückschlagventil und mit einem entsperrbaren Rückschlagventil.
Figur 4 zeigt eine weitere alternative Ausführungsvariante des rfindungsgemäßen Kryotanks für eine zweiflutige Betankung mit einem Rückschlagventil, einem entsperrbaren Rückschlagventil und einem Innentankdruckregelventil.

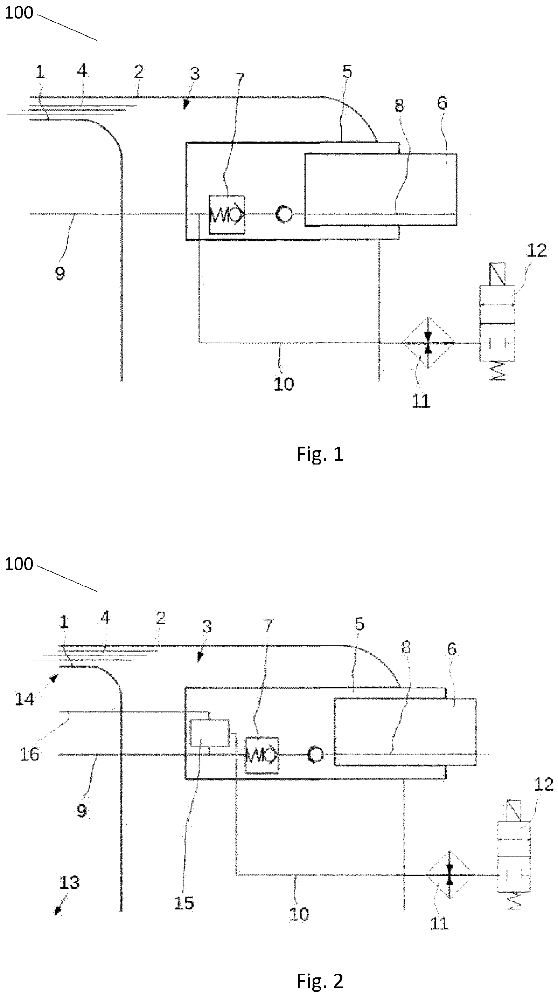

Fig. 1 zeigt einen Ausschnitt eines Kryotanks 100 für eine einflutige Betankung ohne Gasrückführung zur Tankstelle umfassend einen Innentank 1 zur Aufnahme des kryogenen Kraftstoffs bei einem bestimmten Druck bzw. bei einer bestimmten Temperatur, einen Außentank 2 zur Begrenzung des Isolationsraums 3 zwischen dem Innentank 1 und den Außentank 2 mit einer Isolation 4 zur Verringerung des Wärmeeintrags zum Innentank 1 und einen Einfüllstutzen 5 in Johnson-Cox-Bauweise zur Aufnahme der fahrzeugseitigen Betankungskupplung 6. Im Einfüllstutzen 5 ist ein Rückschlagventil 7 angeordnet, welches bei der Betankung durch den Betankungsstrom öffnet, den Innentank 1 im Fahrbetrieb verschließt und einen Druckausgleich in den Innentank 1 ermöglicht. Der Eingang des Rückschlagventils 7 ist mit der Befülleitung 8 der fahrzeugseitigen Betankungskupplung 6 verbunden und der Ausgang des Rückschlagventils 7 ist mit einer im Innentank 1 endenden Betankungs- und Entnahmeleitung 9 zur Befüllung und zur Entnahme sowie mit einer Entnahmeleitung 10 zum Wärmetauscher 11 zur Erwärmung des kryogenen Kraftstoffs und nachfolgend einem elektromagnetischen Absperrventil 12 zum Verschließen der Entnahmeleitung im Stillstand verbunden. Das kryogene Ventil kann vorzugsweise als kryogenes Rückschlagventil 7 oder kryogenes elektromechanisches Absperrventil ausgeführt sein. Zudem kann das kryogene Ventil dazu ausgebildet sein, bei der Betankung durch den Kraftstoffstrom geöffnet zu werden.

Bei der Betankung strömt der kryogene Kraftstoff aufgrund eines Druckgefälles zwischen der Tankstelle und dem Innentank 1 über das in die Offenstellung gedrückte Rückschlagventil 7 in den Innentank 1. Nach Beendigung der Betankung schließt das Rückschlagventil 7 automatisch. Bei der Entnahme strömt der kryogene Kraftstoff aufgrund eines Druckgefälles zwischen dem Innentank 1 und dem Verbraucher über den Wärmetauscher 11 und das durch Bestromen geöffnete Absperrventil 12 aus dem Innentank 1 und wird im Wärmetauscher 11 erwärmt. Das Rückschlagventil 7 ist bei der Entnahme geschlossen. Das Absperrventil 12 ist nur geöffnet, wenn der Verbraucher mit Kraftstoff versorgt wird.

Der Betankungspfad zur Befüllung des Innentanks 1 zwischen der fahrzeugseitigen Befüllkupplung 6 und dem Innentank 1 umfasst mit dem kryogenen Rückschlagventil 7 eine kryogene Schaltkomponente. Der Entnahmepfad zur Entleerung des Innentanks 1 zwischen dem Innentank 1 und der Vorlaufleitung zum Verbraucher umfasst mit dem elektromagnetischen Absperrventil 12 eine nicht-kryogene Schaltkomponente.

Der Kryotank 100 kann mit kryogenem überkritischen Kraftstoff, d.h. Kraftstoff mit überkritischem Zustand oder mit kryogenem flüssigen Kraftstoff befüllt werden, wobei kein kryogener gasförmiger Kraftstoff zur Tankstelle zurückfließt. Endet die Betankungs- und Entnahmeleitung 9 an der Bodenseite 13 des Innentanks 1, wird nach überkritischer Betankung je nach Wärmeleistung eines Innentankwärmetauschers kryogener überkritischer und/oder kryogener flüssiger Kraftstoff entnommen werden. Endet die Betankungs- und Entnahmeleitung 9 an der Bodenseite 13 des Innentanks 1, wird nach unterkritischer Betankung vorwiegend kryogener flüssiger Kraftstoff entnommen. Endet die Betankungs- und Entnahmeleitung 9 an der Oberseite 14 des Innentanks 1, wird nach überkritischer Betankung je nach Wärmeleistung des Innentankwärmetauschers kryogener überkritischer und/oder kryogener gasförmiger Kraftstoff entnommen. Endet die Betankungs- und Entnahmeleitung 9 an der Oberseite 14 des Innentanks 1, wird bei unterkritischer Betankung kryogener gasförmiger Kraftstoff entnommen.

Vorzugsweise ist das Rückschlagventil 7 am innentankseitigen Ende des Einfüllstutzens 5 angeordnet und nach Entfernung der fahrzeugseitigen Betankungskupplung 6 zugängig. Wahlweise ist das Rückschlagventil 7 in einem in Betankungsrichtung nach dem innentankseitigen Ende des Einfüllstutzens 5 und mit dem Einfüllstutzen 5 verbundenen Raum angeordnet und nach Entfernung der fahrzeugseitigen Betankungskupplung 6 über den Einfüllstutzen 5 zugängig. Wahlweise ist das Rückschlagventil 7 in einem in Betankungsrichtung vor dem innentankseitigen Ende des Einfüllstutzens 5 oder an bzw. in der fahrzeugseitigen Betankungskupplung 6 angeordnet und nach Entfernung der fahrzeugseitigen Betankungskupplung 6 zugängig. Wahlweise ist das Rückschlagventil 7 in einem separaten wärmeisolierten rohrförmigen Teil, der mit dem Außentank verbunden ist, angeordnet und über den rohrförmigen Teil zugängig.

Vorzugsweise erfolgt die Entnahme über die Betankungs- und Entnahmeleitung 9 und die Entnahmeleitung 10. Wahlweise erfolgt die Entnahme über eine separate Entnahmeleitung zwischen dem Innentank 1 und dem Ausgang des Rückschlagventils 7 oder einer separaten Entnahmeleitung zwischen dem Innentank 1 und dem Wärmetauscher 11.

Wahlweise ersetzt ein elektromechanisches Absperrventil das Rückschlagventil 7 .

Bevorzugt ist das Absperrventil 12 nach dem Wärmetaucher angeordnet, wahlweise ist das Absperrventil 12 vor dem Wärmetauscher, bevorzugt im Bereich der Kryoventile, angeordnet.

Bevorzugt erfolgt die Betankung mit kryogenem überkritischen Kraftstoff, wahlweise erfolgt die Betankung mit kryogenem flüssigen Kraftstoff.

Fig. 2 zeigt eine alternative Ausführungsvariante des erfindungsgemäßen Kryotanks 100 mit einem Ausschnitt eines Kryotanks 100 für eine einflutige Betankung ohne Gasrückführung zur Tankstelle umfassend einen Innentank 1 zur Aufnahme des kryogenen Kraftstoffs bei einem bestimmten Druck bzw. einer bestimmten Temperatur, einen Außentank 2 zur Begrenzung des Isolationsraums 3 zwischen dem Innentank 1 und den Außentank 2 mit einer Isolation 4 zur Verringerung des Wärmeeintrags zum Innentank 1 und einen Einfüllstutzen 5 in Johnson-Cox-Bauweise zur Aufnahme der fahrzeugseitigen Betankungskupplung 6. Im Einfüllstutzen 5 ist ein Rückschlagventil 7 angeordnet, welches bei der Betankung durch den Betankungsstrom öffnet, den Innentank 1 im Fahrbetrieb verschließt und einen Druckausgleich zum Innentank 1 ermöglicht. Der Eingang des Rückschlagventils 7 ist mit der Befülleitung 8 der fahrzeugseitigen Betankungskupplung 6 verbunden und der Ausgang des Rückschlagventils 7 ist mit einer im Innentank 1 endenden Betankungs- und Entnahmeleitung 9 zur Befüllung und zur Entnahme verbunden. Im Einfüllstutzen 5 ist weiters ein Innentankdruckregelventil 15 für die Entnahme angeordnet und eingangsseitig mit der Betankungs- und Entnahmeleitung 9 und einer im Innentank 1 endenden Entnahmeleitung 16 und ausgangsseitig mit der Entnahmeleitung 10 zum Wärmetauscher 11 verbunden, wobei die Betankungs- und Entnahmeleitung 9 zur Entnahme von kryogenem flüssigen Kraftstoff an der Unterseite 13 des Innentanks 1 endet oder über eine entsprechende Bohrung verfügt und die Entnahmeleitung 16 an der Oberseite 14 des Innentanks 1 endet. Der Wärmetauscher 11 erwärmt den kryogenen Kraftstoff und das nachfolgend angeordnete elektromagnetische Absperrventil 12 verschließt die Entnahmeleitung 10 im Stillstand.

Das Innentankdruckregelventil 15 ist ein Schaltorgan, dass aus LNG-Tanks bekannt ist, und ermöglicht bei Innentankdrücken über einen festgelegten Umschaltdruck des Innentankdruckregelventils 15 die Entnahme von kryogenem gasförmigen bzw. kryogenem überkritischen Kraftstoff und bei Innentankdrücken unter einen festgelegten Umschaltdruck des Innentankdruckregelventils 15 die Entnahme von kryogenem flüssigen bzw. kryogenem überkritischen Kraftstoff.

Bei der Betankung strömt der kryogene Kraftstoff aufgrund eines Druckgefälles zwischen der Tankstelle und dem Innentank 1 über das geöffnete Rückschlagventil 7 in den Innentank 1. Bei Beendigung der Betankung schließt das Rückschlagventil 7 automatisch. Bei der Entnahme strömt der kryogene Kraftstoff aufgrund eines Druckgefälles zwischen dem Innentank 1 und dem Verbraucher in Abhängigkeit vom Druck im Innentank 1 über die Befüll- und Entnahmeleitung 9 oder die Entnahmeleitung 16, das Innentankdruckregelventil 15, den Wärmetauscher 11 und das geöffnetem Absperrventil 12 aus dem Innentank 1 und wird im Wärmetauscher 11 erwärmt. Das Rückschlagventil 7 ist bei der Entnahme geschlossen. Das Absperrventil 12 ist nur geöffnet, wenn der Verbraucher mit Kraftstoff versorgt wird.

Der Betankungspfad zur Befüllung des Innentanks 1 zwischen der fahrzeugseitigen Befüllkupplung 6 und dem Innentank 1 umfasst mit dem kryogenen Rückschlagventil 7 eine kryogene Schaltkomponente. Der Entnahmepfad zur Entleerung des Innentanks 1 zwischen dem Innentank 1 und der Vorlaufleitung zum Verbraucher umfasst mit dem kryogenen Innentankdruckregelventil 15 eine kryogene Schaltkomponente und mit dem elektromagnetischen Absperrventil 12 eine nicht-kryogene Schaltkomponente.

Der Kryotank 1 kann mit kryogenem überkritischen Kraftstoff oder mit kryogenem flüssigen Kraftstoff befüllt werden, wobei kein kryogener gasförmiger Kraftstoff zur Tankstelle zurückfließt.

Nach überkritischer Betankung wird je nach Wärmeleistung des Innentankwärmetauschers kryogener überkritischer und/oder kryogener flüssiger Kraftstoff bei Innentankdrücken unter dem Umschaltpunkt des Innentankdruckregelventils 15 entnommen. Nach überkritischer Betankung wird kryogener gasförmiger Kraftstoff bei Innentankdrücken über dem Umschaltpunkt des Innentankdruckregelventils 15 entnommen. Nach unterkritischer Betankung wird kryogener flüssiger Kraftstoff bei Innentankdrücken unter dem Umschaltpunkt des Innentankdruckregelventils 15 entnommen. Nach unterkritischer Betankung wird kryogener gasförmiger Kraftstoff bei Innentankdrücken über dem Umschaltpunkt des Innentankdruckregelventils 15 entnommen.

Vorzugsweise sind das Rückschlagventil 7 und das Innentankdruckregelventil 15 am innentankseitigen Ende des Einfüllstutzens 5 angeordnet und nach Entfernung der fahrzeugseitigen Betankungskupplung 6 zugängig. Wahlweise sind das Rückschlagventil 7 und das Innentankdruckregelventil 15 in einem in Betankungsrichtung nach dem innentankseitigen Ende des Einfüllstutzens 5 und mit dem Einfüllstutzen 5 verbundenen Raum angeordnet und nach Entfernung der fahrzeugseitigen Betankungskupplung 6 über den Einfüllstutzen 5 zugängig. Wahlweise sind das Rückschlagventil 7 und das Innentankdruckregelventil 15 in einem in Betankungsrichtung vor dem innentankseitigen Ende des Einfüllstutzens 5 oder an der fahrzeugseitigen Betankungskupplung 6 angeordnet und nach Entfernung der fahrzeugseitigen Betankungskupplung 6 zugängig. Wahlweise sind das Rückschlagventil 7 und das Innentankdruckregelventil 15 in einem separaten wärmeisolierten rohrförmigen Teil, der mit dem Außentank verbunden ist, angeordnet und über den rohrförmigen Teil zugängig.

Vorzugsweise ist das Innentankdruckregelventil 15 mit der Betankungs- und Entnahmeleitung 9 verbunden. Wahlweise ist das Innentankdruckregelventil 15 mit einer separaten Entnahmeleitung aus dem Innentank 1 verbunden.

Wahlweise ersetzt ein elektromechanisches Absperrventil das Rückschlagventil 7, wobei die Entnahmeleitung 10 in Betankungsrichtung vor oder nach dem elektromechanisches Absperrventil angeordnet ist.

Wahlweise ersetzt ein elektromechanisches 2/2-Wegeventil das mechanische Innentankdruckregelventil 15.

Wahlweise ersetzt ein elektromechanisches 3/2-Wegeventil oder ein elektromechanisches 3/3-Wegeventil das Rückschlagventil 7 und das Innentankdruckregelventil 15, wobei die Entnahmeleitung 10 in Betankungsrichtung vor oder nach dem Wegeventil abzweigt.

Bevorzugt ist das Absperrventil 12 nach dem Wärmetaucher angeordnet, wahlweise ist das Absperrventil 12 vor dem Wärmetauscher, bevorzugt im Bereich der Kryoventile, angeordnet.

Bevorzugt erfolgt die Betankung mit kryogenem überkritischen Kraftstoff, wahlweise erfolgt die Betankung mit kryogenem flüssigen Kraftstoff.

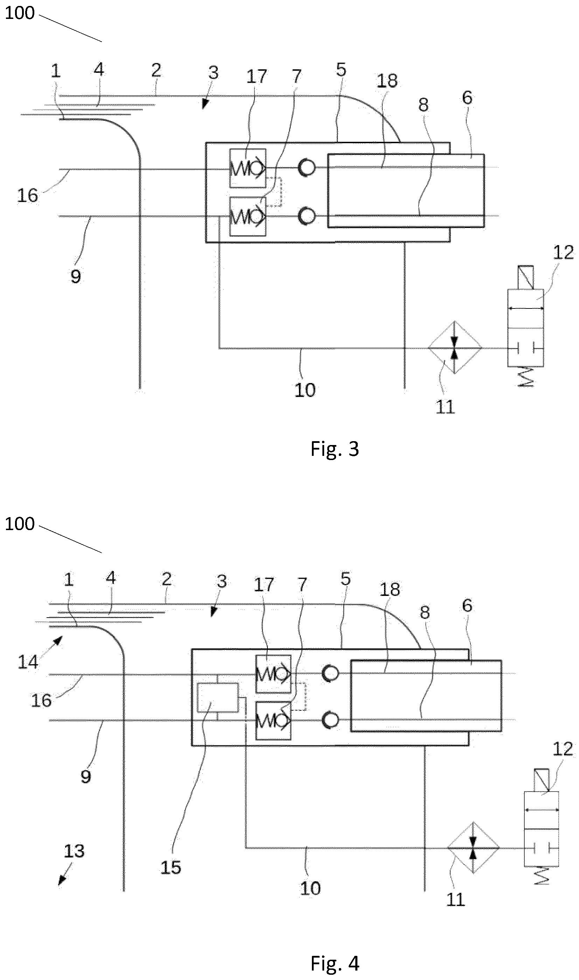

Fig. 3 zeigt eine alternative Ausführungsvariante des erfindungsgemäßen Kryotanks 100 mit einem Ausschnitt eines Kryotanks 100 für eine zweiflutige Betankung mit Gasrückführung zur Tankstelle umfassend einen Innentank 1 zur Aufnahme des kryogenen Kraftstoffs bei einem bestimmten Druck bzw. Temperatur, einen Außentank 2 zur Begrenzung des Isolationsraums 3 zwischen dem Innentank 1 und dem Außentank 2 mit einer Isolation 4 zur Verringerung des Wärmeeintrags zum Innentank 1 und einen Einfüllstutzen 5 in Johnson-Cox-Bauweise zur Aufnahme der fahrzeugseitigen Betankungskupplung 6. Im Einfüllstutzen 5 ist ein Rückschlagventil 7 angeordnet, welches bei der Betankung durch den Betankungsstrom öffnet, den Innentank 1 im Fahrbetrieb verschließt und einen Druckausgleich zum Innentank 1 ermöglicht. Der Eingang des Rückschlagventils 7 ist mit der Befülleitung 8 der fahrzeugseitigen Betankungskupplung 6 verbunden und der Ausgang des Rückschlagventils 7 ist mit einer im Innentank 1 endenden Betankungs- und Entnahmeleitung 9 zur Befüllung und zur Flüssigentnahme verbunden. Im Einfüllstutzen 5 ist weiters ein entsperrbares Rückschlagventil 17 angeordnet, welches bei der Betankung durch den Druck in der Betankungsleitung öffnet oder aufgrund einer mechanischen Kopplung mit dem Rückschlagventil 7 durch die Öffnungsbewegung des Dichtelements im Rückschlagventil 7 öffnet und dadurch den Rückfluss von Gas aus dem Innentank 1 zur Tankstelle ermöglicht, den Innentank 1 im Fahrbetrieb verschließt und einen Druckausgleich vom Einfüllstutzen 5 zum Innentank 1 ermöglicht. Der Eingang des entsperrbaren Rückschlagventils 17 ist mit der Rückgasleitung 18 der fahrzeugseitigen Betankungskupplung 6 verbunden und der Ausgang des entsperrbaren Rückschlagventils 17 ist mit einer im Innentank 1 endenden Entnahmeleitung 16 zur Gasentnahme verbunden. Weiters ist eine Entnahmeleitung 10 zum Wärmetauscher 11 vorgesehen, die für die Flüssigentnahme den Ausgang des Rückschlagventils 7 mit dem Eingang des Wärmetauschers 11 verbindet. Der Wärmetauscher 11 erwärmt den kryogenen Kraftstoff und das nachfolgend angeordnete elektromagnetische Absperrventil 12 verschließt die Entnahmeleitung 10 im Stillstand.

Bei der Betankung strömt der kryogene flüssige Kraftstoff aufgrund eines Druckgefälles zwischen der Tankstelle und dem Innentank 1 über das geöffnete Rückschlagventil 7 in den Innentank 1 und der kryogene gasförmige Kraftstoff aufgrund eines Druckgefälles zwischen dem Innentank 1 und der Tankstelle über das entsperrte und damit geöffnete entsperrbare Rückschlagventil 17 zur Tankstelle. Bei Beendigung der Betankung schließt das Rückschlagventil 7 und somit auch das entsperrbare Rückschlagventil 17 automatisch. Bei der Entnahme strömt der kryogene flüssige Kraftstoff aufgrund eines Druckgefälles zwischen dem Innentank 1 und dem Verbraucher über den Wärmetauscher 11 und das geöffnetem Absperrventil 12 aus dem Innentank 1 und wird im Wärmetauscher 11 erwärmt. Das Rückschlagventil 7 und das entsperrbare Rückschlagventil 17 ist bei der Entnahme geschlossen. Das Absperrventil 12 ist nur geöffnet, wenn der Verbraucher mit Kraftstoff versorgt wird.

Der Betankungspfad zur Befüllung des Innentanks 1 zwischen der fahrzeugseitigen Befüllkupplung 6 und dem Innentank 1 umfasst mit dem kryogenen Rückschlagventil 7 und dem kryogenen entsperrbaren Rückschlagventil 17 zwei kryogene Schaltkomponenten. Der Entnahmepfad zur Entleerung des Innentanks 1 zwischen dem Innentank 1 und der Vorlaufleitung zum Verbraucher umfasst mit dem elektromagnetischen Absperrventil 12 eine nicht-kryogene Schaltkomponente.

Der Kryotank 1 kann mit kryogenem flüssigen Kraftstoff befüllt werden, wobei kryogener gasförmiger Kraftstoff zur Tankstelle zurückströmt.

Nach der Betankung wird je nach Wärmeleistung des Innentankwärmetauschers kryogener flüssiger und nachfolgend kryogener gasförmiger Kraftstoff entnommen.

Vorzugsweise sind das Rückschlagventil 7 und das entsperrbare Rückschlagventil 17 am innentankseitigen Ende des Einfüllstutzens 5 angeordnet und nach Entfernung der fahrzeugseitigen Betankungskupplung 6 zugängig. Wahlweise sind das Rückschlagventil 7 und das entsperrbare Rückschlagventil 17 in einem in Betankungsrichtung nach dem innentankseitigen Ende des Einfüllstutzens 5 und mit dem Einfüllstutzen 5 verbundenen Raum angeordnet und nach Entfernung der fahrzeugseitigen Betankungskupplung 6 über den Einfüllstutzen 5 zugängig. Wahlweise sind das Rückschlagventil 7 und das entsperrbare Rückschlagventil 17 in einem in Betankungsrichtung vor dem innentankseitigen Ende des Einfüllstutzens 5 oder an bzw. in der fahrzeugseitigen Betankungskupplung 6 angeordnet und nach Entfernung der fahrzeugseitigen Betankungskupplung 6 zugängig. Wahlweise sind das Rückschlagventil 7 und das entsperrbare Rückschlagventil 17 in einem separaten wärmeisolierten rohrförmigen Teil, der mit dem Außentank verbunden ist, angeordnet und über den rohrförmigen Teil zugängig.

Vorzugsweise erfolgt die Entnahme von kryogenem flüssigen Kraftstoff über die Betankungs- und Entnahmeleitung 9. Wahlweise erfolgt die Entnahme von kryogenem flüssigen Kraftstoff über eine separate Entnahmeleitung zwischen dem Innentank 1 und dem Ausgang des Rückschlagventils 7 oder einer separaten Entnahmeleitung zwischen dem Innentank 1 und dem Wärmetauscher 11. Wahlweise erfolgt die Entnahme von kryogenem gasförmigem Kraftstoff über die Entnahmeleitung 16 und die Entnahmeleitung 10, wozu die Entnahmeleitung 10 statt dem Ausgang des Rückschlagventils 7 den Eingang des entsperrbaren Rückschlagventils 17 mit dem Eingang des Wärmetauschers 11 verbindet. Wahlweise erfolgt die Entnahme von kryogenem gasförmigen Kraftstoff über eine separate Entnahmeleitung zwischen dem Innentank 1 und dem Eingang des entsperrbaren Rückschlagventils 17 oder einer separaten Entnahmeleitung zwischen dem Innentank 1 und dem Wärmetauscher 11.

Wahlweise ersetzt ein elektromechanisches Absperrventil das Rückschlagventil 7.

Wahlweise ersetzt ein elektromechanisches Absperrventil das entsperrbare Rückschlagventil 17.

Wahlweise ersetzt ein 4/3-Wegeventil das Rückschlagventil 7 und das entsperrbare Rückschlagventil 17.

Bevorzugt ist das Absperrventil 12 nach dem Wärmetaucher angeordnet, wahlweise ist das Absperrventil 12 vor dem Wärmetauscher, bevorzugt im Bereich der Kryoventile, angeordnet.

Bevorzugt erfolgt die Betankung mit kryogenem flüssigen Kraftstoff, wahlweise erfolgt die Betankung mit kryogenen überkritischen Kraftstoff . Der Kryotank 100 umfasst somit gemäß einer Ausführungsvariante ein kryogenes Rückschlagventil zur Leitung eines Kraftstoffstroms im flüssigen oder überkritischen Aggregatzustand bei der Betankung von einer Tankstelle in den Innentank 1, wobei das Rückschlagventil 7 bei der Betankung geöffnet ist, und wobei das Rückschlagventil 7 bei der Entnahme geschlossen ist. Zudem kann der Kryotank 100 ein kryogenes elektromechanisches Absperrventil zur Leitung eines Kraftstoffstroms im flüssigen oder überkritischen Aggregatzustand bei der Betankung von einer Tankstelle in den Innentank 1 umfassen, wobei das kryogene elektromechanische Absperrventil bei der Betankung und wahlweise bei der Entnahme geöffnet ist.

Fig. 4 zeigt eine alternative Ausführungsvariante des erfindungsgemäßen Kryotanks 100 mit einem Ausschnitt eines Kryotanks 100 für eine zweiflutige Betankung mit Gasrückführung zur Tankstelle umfassend einen Innentank 1 zur Aufnahme des kryogenen Kraftstoffs bei einem bestimmten Druck bzw. bei einer bestimmten Temperatur, einen Außentank 2 zur Begrenzung des Isolationsraums 3 zwischen dem Innentank 1 und dem Außentank 2 mit einer Isolation 4 zur Verringerung des Wärmeeintrags zum Innentank 1 und einen Einfüllstutzen 5 in Johnson-Cox-Bauweise zur Aufnahme der fahrzeugseitigen Betankungskupplung 6. Im Einfüllstutzen 5 ist ein Rückschlagventil 7 angeordnet, welches bei der Betankung durch den Betankungsstrom öffnet, den Innentank 1 im Fahrbetrieb verschließt und einen Druckausgleich zum Innentank 1 ermöglicht. Der Eingang des Rückschlagventils 7 ist mit der Befülleitung 8 der fahrzeugseitigen Betankungskupplung 6 verbunden und der Ausgang des Rückschlagventils 7 ist mit einer im Innentank 1 endenden Betankungs- und Entnahmeleitung 9 zur Befüllung und zur Flüssigentnahme verbunden. Im Einfüllstutzen 5 ist weiters ein entsperrbares Rückschlagventil 17 angeordnet, welches bei der Betankung durch den Druck in der Betankungsleitung öffnet oder aufgrund einer mechanischen Koppelung mit dem Rückschlagventil 7 durch die Öffnungsbewegung des Dichtelements im Rückschlagventils 7 öffnet und dadurch den Rückfluss von Gas aus dem Innentank 1 zur Tankstelle ermöglicht, sowie den Innentank 1 im Fahrbetrieb verschließt und einen Druckausgleich vom Einfüllstutzen 5 in den Innentank 1 ermöglicht. Der Eingang des entsperrbaren Rückschlagventils 17 ist mit der Rückgasleitung 18 der fahrzeugseitigen Betankungskupplung 6 verbunden und der Ausgang des entsperrbaren Rückschlagventils 17 ist mit einer im Innentank 1 endenden Entnahmeleitung 16 zur Gasentnahme verbunden. Im Einfüllstutzen 5 ist weiters ein Innentankdruckregelventil 15 für die Entnahme angeordnet und eingangsseitig mit der Betankungs- und Entnahmeleitung 9 und einer im Innentank 1 endenden Entnahmeleitung 18 und ausgangsseitig mit einer Entnahmeleitung 10 zum Wärmetauscher 11 verbunden, wobei die Betankungs- und Entnahmeleitung 9 an der Unterseite 13 des Innentanks 1 endet oder über eine entsprechende Bohrung verfügt und die Entnahmeleitung 18 an der Oberseite 14 des Innentanks 1 endet. Der Wärmetauscher 11 erwärmt den kryogenen Kraftstoff und das nachfolgend angeordnete elektromagnetische Absperrventil 12 verschließt die Entnahmeleitung 10 im Stillstand.

Das Innentankdruckregelventil 15 ist ein Schaltorgan, dass aus LNG-Tanks bekannt ist und ermöglicht bei Innentankdrücken über einem festgelegten Umschaltdruck des Innentankdruckregelventils 15 die Entnahme von gasförmigem Kraftstoff und bei Innentankdrücken unter einen festgelegten Umschaltdruck des Innentankdruckregelventils 15 die Entnahme von flüssigem Kraftstoff.

Bei der Betankung strömt der kryogene flüssige Kraftstoff aufgrund eines Druckgefälles zwischen der Tankstelle und dem Innentank 1 über das geöffnete Rückschlagventil 7 in den Innentank 1 und der kryogene gasförmige Kraftstoff aufgrund eines Druckgefälles zwischen dem Innentank 1 und der Tankstelle über das entsperrte und damit geöffnete entsperrbare Rückschlagventil 17 zur Tankstelle. Bei Beendigung der Betankung schließt das Rückschlagventil 7 und somit auch das entsperrbare Rückschlagventil 17 automatisch. Bei der Entnahme strömt je nach Innentankdruck der kryogene flüssige oder der kryogene gasförmige Kraftstoff aufgrund eines Druckgefälles zwischen dem Innentank 1 und dem Verbraucher in Abhängigkeit vom Druck im Innentank 1 über die Befüll- und Entnahmeleitung 9 oder die Entnahmeleitung 16, das Innentankdruckregelventil 15, den Wärmetauscher 11 und das geöffnetem Absperrventil 12 aus dem Innentank 1 und wird im Wärmetauscher 11 erwärmt. Das Rückschlagventil 7 und das entsperrbare Rückschlagventil 17 sind bei der Entnahme geschlossen. Das Absperrventil 12 ist nur geöffnet, wenn der Verbraucher mit Kraftstoff versorgt wird.

Der Betankungspfad zur Befüllung des Innentanks 1 zwischen der fahrzeugseitigen Befüllkupplung 6 und dem Innentank 1 umfasst mit dem kryogenen Rückschlagventil 7 und dem kryogenen entsperrbaren Rückschlagventil 17 zwei kryogene Schaltkomponenten. Der Entnahmepfad zur Entleerung des Innentanks 1 zwischen dem Innentank 1 und der Vorlaufleitung zum Verbraucher umfasst mit dem kryogenen Innentankdruckregelventil 15 eine kryogene Schaltkomponente und dem elektromagnetischen Absperrventil 12 eine nicht-kryogene Schaltkomponente.

Der Kryotank 1 kann mit kryogenem flüssigen Kraftstoff befüllt werden, wobei kryogener gasförmiger Kraftstoff zur Tankstelle zurückströmt.

Nach der Betankung wird je nach Wärmeleistung des Innentankwärmetauschers flüssiger und nachfolgend gasförmiger Kraftstoff entnommen.

Vorzugsweise sind das Rückschlagventil 7, das entsperrbare Rückschlagventil 17 und das Innentankdruckregelventil 15 am innentankseitigen Ende des Einfüllstutzens 5 angeordnet und nach Entfernung der fahrzeugseitigen Betankungskupplung 6 zugängig. Wahlweise sind das Rückschlagventil 7, das entsperrbare Rückschlagventil 17 und das Innentankdruckregelventil 15 in einem in Betankungsrichtung nach dem innentankseitigen Ende des Einfüllstutzens 5 und mit dem Einfüllstutzen 5 verbundenen Raum angeordnet und nach Entfernung der fahrzeugseitigen Betankungskupplung 6 über den Einfüllstutzen 5 zugängig. Wahlweise sind das Rückschlagventil 7, das entsperrbare Rückschlagventil 17 und das Innentankdruckregelventil 15 in einem in Betankungsrichtung vor dem innentankseitigen Ende des Einfüllstutzens 5 oder an bzw. in der fahrzeugseitigen Betankungskupplung 6 angeordnet und nach Entfernung der fahrzeugseitigen Betankungskupplung 6 zugängig. Wahlweise sind das Rückschlagventil 7, das entsperrbare Rückschlagventil 17 und das Innentankdruckregelventil 15 in einem separaten wärmeisolierten rohrförmigen Teil, der mit dem Außentank verbunden ist, angeordnet und über den rohrförmigen Teils zugängig.

Vorzugsweise erfolgt die Entnahme von kryogenem flüssigen Kraftstoff über die Betankungs- und Entnahmeleitung 9. Wahlweise erfolgt die Entnahme von kryogenem flüssigen Kraftstoff über eine separate Entnahmeleitung zwischen dem Innentank 1 und dem Innentankdruckregelventil 15.

Vorzugsweise erfolgt die Entnahme von kryogenem gasförmigen Kraftstoff über die Entnahmeleitung 18. Wahlweise erfolgt die Entnahme von kryogenem gasförmigen Kraftstoff über eine separate Entnahmeleitung zwischen dem Innentank 1 und dem Innentankdruckregelventil 15.

Wahlweise ersetzt ein elektromechanisches Absperrventil das Rückschlagventil 7.

Wahlweise ersetzt ein elektromechanisches Absperrventil das entsperrbare Rückschlagventil 17.

Wahlweise ersetzt ein elektromechanisches 2/2-Wegeventil das mechanische Innentankdruckregelventil 15.

Bevorzugt ist das Absperrventil 12 nach dem Wärmetaucher angeordnet, wahlweise ist das Absperrventil 12 vor dem Wärmetauscher, bevorzugt im Bereich der Kryoventile, angeordnet.

Wahlweise ersetzt ein elektromechanisches 5/3-Wegeventil oder 4/3-Wegeventil das Rückschlagventil 7, das entsperrbare Rückschlagventil 17 und das Innentankdruckregelventil 15, wobei die Entnahmeleitung 10 in Betankungsrichtung vor oder nach dem Wegeventil abzweigt.

Wahlweise ersetzt ein elektromechanisches Absperrventil für kryogenen flüssigen Kraftstoff das Rückschlagventil 7 und ein weiteres elektromechanisches Absperrventil für kryogenen gasförmigen Kraftstoff das entsperrbare Rückschlagventil 17 und ein kryogenes Rückschlagventil zwischen den beiden elektromechanischen Absperrventilen mit einer Durchströmungsrichtung vom Gasventil zum Flüssigventil das Innentankdruckregelventil 15, um bei der Betankung ein Rückströmen von kryogenen flüssigem Kraftstoff zur Tankstelle zu unterbinden, eine Entnahme von kryogenen flüssigen Kraftstoff bei geöffnetem Flüssigventil und geschlossenem Gasventil zu ermöglichen und eine Entnahme von kryogenem gasförmigen Kraftstoff bei geöffnetem Gasventil und geschlossenem Flüssigventil zu ermöglichen und wobei die Entnahmeleitung 10 in Betankungsrichtung vor dem Flüssigventil abzweigt.

Bevorzugt erfolgt die Betankung mit kryogenem flüssigen Kraftstoff, wahlweise erfolgt die Betankung mit kryogenem überkritischen Kraftstoff.

Der Kryotank umfasst gemäß einer Ausführungsvariante ein kryogenes Rückschlagventil 7 zur Leitung eines Kraftstoffstroms bei der Betankung von einer Tankstelle in den Innentank 1 und ein kryogenes entsperrbares Rückschlagventil 17 zur Leitung eines gasfömigen Kraftstoffstroms bei der Betankung aus dem Innentank 1 zur Tankstelle, wobei das kryogene entsperrbare Rückschlagventil 17 durch einen Druck vor dem kryogenen Rückschlagventil 7 oder infolge einer mechanischen Kopplung zwischen dem kryogenen Rückschlagventil 7 und dem entsperrbaren kryogenen Rückschlagventil 17 durch ein Öffnen eines Dichtelements im kryogenen Rückschlagventils 7 öffnet, wobei das kryogene Rückschlagventil 7 und das entsperrbare kryogene Rückschlagventil 17 bei der Betankung geöffnet sind und wobei das Rückschlagventil 7 und das entsperrbare Rückschlagventil 17 bei der Entnahme geschlossen sind. Zudem kann der Kryotank 100 ein kryogenes elektromechanisches Absperrventil zur Leitung eines Kraftstoffstroms im flüssigen oder überkritischen Aggregatzustand bei der Betankung von einer Tankstelle in den Innentank 1 ein kryogenes elektromechanisches Absperrventil zur Leitung eines Kraftstoffstroms im gasförmigen Aggregatzustand bei der Betankung vom Innentank 1 zu einer Tankstelle umfassen, wobei die kryogen elektromechanischen Absperrventile bei der Betankung geschlossen sind und wobei wahlweise ein kryogenes elektromechanisches Absperrventil bei der Entnahme geöffnet ist.

Erfindungsgemäß ist zumindest ein kryogenes Ventil zur Leitung des Kraftstoffstroms bei der Betankung und/oder bei der Entnahme innerhalb des Einfüllstutzens 5 angeordnet. Dieses ist vorzugsweise in einem mit dem Einfüllstutzen 5 in Verbindung stehenden Bauraum, oder in einem innerhalb des Einfüllstutzens 5 angeordneten Bauraum angeordnet, und nach Entfernung der fahrzeugseitigen Betankungskupplung 6 entnehmbar. Das kryogene Ventil im Einfüllstutzen kann vorzugsweise als kryogenes Rückschlagventil 7 oder kryogenes elektromechanisches Absperrventil zur Leitung eines Kraftstoffstroms im flüssigen oder überkritischen Aggregatzustand bei der Betankung von einer Tankstelle in den Innentank 1 ausgeführt sein:
Der Kryotank 100 umfasst somit gemäß einer bevorzugten Ausführungsvariante ein kryogenes Rückschlagventil 7 zur Leitung eines Kraftstoffstroms im flüssigen oder überkritischen Aggregatzustand bei der Betankung von einer Tankstelle in den Innentank 1, wobei das kryogene Rückschlagventil 7 bei der Betankung durch den Kraftstoffstrom geöffnet ist, und wobei das kryogene Rückschlagventil 7 bei der Entnahme geschlossen ist. Zudem kann der Kryotank 100 ein kryogenes elektromechanisches Absperrventil zur Leitung eines Kraftstoffstroms im flüssigen oder überkritischen Aggregatzustand bei der Betankung von einer Tankstelle in den Innentank 1 umfassen, wobei das kryogene elektromechanische Absperrventil bei der Betankung und wahlweise bei der Entnahme geöffnet ist.

Der Kryotank 100 umfasst somit gemäß einer Ausführungsvariante ein kryogenes Rückschlagventil 7 zur Leitung eines Kraftstoffstroms im flüssigen oder überkritischen Aggregatzustand bei der Betankung von einer Tankstelle in den Innentank 1 und ein kryogenes entsperrbares Rückschlagventil 17 zur Leitung eines Kraftstoffstroms im gasförmigen Aggregatzustand bei der Betankung aus dem Innentank 1 zur Tankstelle, wobei das kryogene entsperrbare Rückschlagventil 17 durch einen Druck vor dem kryogenen Rückschlagventil 7 oder infolge einer mechanischen Kopplung zwischen dem kryogenen Rückschlagventil 7 und dem entsperrbaren kryogenen Rückschlagventil 17 durch das Dichtelement des kryogenen Rückschlagventils 7 oder einen anderen zur Bauteilkopplung geeigneten Teil des kryogenen Rückschlagventils 7 öffnet und wobei das kryogene Rückschlagventil 7 und das entsperrbare kryogene Rückschlagventil 17 bei der Betankung geöffnet sind, und wobei das kryogene Rückschlagventil 7 und das entsperrbare kryogene Rückschlagventil 17 bei der Entnahme geschlossen sind. Zudem kann der Kryotank 100 ein kryogenes elektromechanisches Absperrventil zur Leitung eines Kraftstoffstroms im flüssigen oder überkritischen Aggregatzustand bei der Betankung von einer Tankstelle in den Innentank 1 und ein kryogenes elektromechanisches Absperrventil zur Leitung eines Kraftstoffstroms im gasförmigenn Aggregatzustand bei der Betankung aus dem Innentank 1 zur Tankstelle umfassen, wobei die beiden kryogenen elektromechanischen Absperrventile bei der Betankung und wahlweise ein kryogenes elektromechanisches Absperrventil bei der Entnahme geöffnet ist.

### Bezugszeichenliste

- 1: Innentank
- 2: Außentank
- 3: Isolationsraum
- 4: Isolation
- 5: Einfüllstutzen
- 6: Fahrzeugseitige Betankungskupplung
- 7: Rückschlagventil
- 8: Befülleitung der Betankungskupplung
- 9: Befüll- und Entnahmeleitung
- 10: Entnahmeleitung
- 11: Wärmetauscher
- 12: Absperrventil
- 13: Unterseite
- 14: Oberseite
- 15: Innentankdruckregelventil
- 16: Entnahmeleitung
- 17: Entsperrbares Rückschlagventil
- 18: Rückgasleitung

## Patentansprüche

1. Kryotank (100) umfassend einen Innentank (1) zur Aufnahme eines kryogenen Kraftstoffs, einen Außentank (2) zur Begrenzung eines Isolationsraums (3) mit einer Isolation (4) zwischen dem Innentank (1) und dem Außentank (2) zur Verringerung des Wärmeeintrags in den Innentank (1) und einen wärmeisolierten Einfüllstutzen (5) zur Aufnahme einer fahrzeugseitigen Betankungskupplung (6), **dadurch gekennzeichnet, dass** der Kryotank (100) zumindest ein innerhalb des Einfüllstutzens (5) angeordnetes kryogenes Ventil zur Leitung des Kraftstoffstroms bei der Betankung und/oder bei der Entnahme umfasst, welches in einem über den Einfüllstutzen (5) zugängigen Bauraum angeordnet und nach Entfernung der fahrzeugseitigen Betankungskupplung (6) entnehmbar ist.

2. Kryotank (100) nach Anspruch 1, **dadurch gekennzeichnet, dass** der Kryotank (100) ein kryogenes Rückschlagventil (7) zur Leitung eines flüssigen oder überkritischen Kraftstoffstroms bei der Betankung von einer Tankstelle in den Innentank (1) umfasst, wobei das Rückschlagventil (7) bei der Betankung geöffnet ist.

3. Kryotank (100) nach Anspruch 1, **dadurch gekennzeichnet, dass** der Kryotank (100) ein kryogenes elektromechanisches Absperrventil zur Leitung eines flüssigen oder überkritischen Kraftstoffstroms bei der Betankung von einer Tankstelle in den Innentank (1) umfasst, wobei das kryogene elektromechanische Absperrventil bei der Betankung und wahlweise bei der Entnahme geöffnet ist.

4. Kryotank (100) nach Anspruch 1, **dadurch gekennzeichnet, dass** der Kryotank (100) ein kryogenes Rückschlagventil (7) zur Leitung eines Kraftstoffstroms bei der Betankung von einer Tankstelle in den Innentank (1) und ein kryogenes entsperrbares Rückschlagventil (17) zur Leitung eines gasfömigen Kraftstoffstroms bei der Betankung aus dem Innentank (1) zur Tankstelle umfasst, wobei das kryogene entsperrbare Rückschlagventil (17) durch einen Druck vor dem kryogenen Rückschlagventil (7) oder infolge einer mechanischen Kopplung zwischen dem kryogenen Rückschlagventil (7) und dem entsperrbaren kryogenen Rückschlagventil (17) durch ein Öffnen eines Dichtelements im kryogenen Rückschlagventils (7) öffnet und wobei das kryogene Rückschlagventil (7) und das entsperrbare kryogene Rückschlagventil (17) bei der Betankung geöffnet sind.

5. Kryotank (100) nach einem der Ansprüche 2 bis 4, **dadurch gekennzeichnet, dass** der Kryotank (100) ein kryogenes Innentankdruckregelventil (15) zur Leitung des Kraftstoffstroms vom Innentank (1) zu einem Verbraucher umfasst, wobei das Innentankdruckregelventil (15) bei einem Innentankdruck über einem festgelegten Umschaltdruck des Innentankdruckregelventils (15) eine Entnahme von gasförmigen oder überkritischen Kraftstoff und wobei das Innentankdruckregelventil (7) bei einem Innentankdruck unter einen festgelegten Umschaltdruck des Innentankdruckregelventils (15) eine Entnahme von flüssigen oder überkritischen Kraftstoff ermöglicht.

6. Kryotank (100) nach Anspruch 2, **dadurch gekennzeichnet, dass** das kryogene Rückschlagventil (7) dazu ausgebildet ist, bei der Betankung des Kryotanks (100) aufgrund eines Druckgefälles zwischen der Tankstelle und dem Innentank (1) in eine Offenstellung gedrückt zu werden.

## Claims

1. Cryogenic tank (100) comprising an internal tank (1) for receiving a cryogenic fuel, an external tank (2) delimiting an insulation chamber (3) with an insulation (4) between the internal tank (1) and the external tank (2) to reduce the heat input into the internal tank (1) and a thermally insulated filler neck (5) for receiving a vehicle-side fueling coupling (6), **characterized in that** the cryogenic tank (100) comprises at least one cryogenic valve which is arranged within the filler neck (5) for guiding the fuel flow during fueling and/or retrieval, and which is arranged in a compartment accessible via the filler neck (5) and may be removed upon removal of the vehicle-side fueling coupling (6).

2. Cryogenic tank (100) according to claim 1, **characterized in that** the cryogenic tank (100) comprises a cryogenic check valve (7) for guiding a liquid or supercritical fuel flow during fueling from a filling station into the internal tank (1), wherein the check valve (7) is open during fueling.

3. Cryogenic tank (100) according to claim 1, **characterized in that** the cryogenic tank (100) comprises a cryogenic electromechanical shutoff valve for guiding a liquid or supercritical fuel flow during fueling from a filling station into the internal tank (1), wherein the cryogenic electromechanical shutoff valve is open during fueling and optionally during retrieval.

4. Cryogenic tank (100) according to claim 1, **characterized in that** the cryogenic tank (100) comprises a cryogenic check valve (7) for guiding a fuel flow during fueling from a filling station into the internal tank (1) and an unlockable cryogenic check valve (17) for guiding a gaseous fuel flow during fueling from the internal tank (1) to the filling station, wherein the unlockable cryogenic check valve (17) opens due to a pressure upstream of the cryogenic check valve (7) or as a result of a mechanical coupling between the cryogenic check valve (7) and the unlockable cryogenic check valve (17) due to the opening of a sealing element in the cryogenic check valve (7) and wherein the cryogenic check valve (7) and the unlockable cryogenic check valve (17) are open during fueling.

5. Cryogenic tank (100) according to any one of claims 2 to 4, **characterized in that**
the cryogenic tank (100) comprises a cryogenic internal tank pressure control valve (15) for guiding the fuel flow from the internal tank (1) to a consumer, wherein the internal tank pressure control valve (15) enables retrieval of gaseous or supercritical fuel when the internal tank pressure is above a determined changeover pressure of the internal tank pressure control valve (15) and wherein the internal tank pressure control valve (7) enables retrieval of liquid or supercritical fuel when the internal tank pressure is below a determined changeover pressure of the internal tank pressure control valve (15).

6. Cryogenic tank (100) according to claim 2, **characterized in that** the cryogenic check valve (7) is configured to be pushed into an open position during fueling of the cryogenic tank (100) due to a pressure difference between the filling station and the internal tank (1).

## Revendications

1. Réservoir cryogénique (100) comprenant un réservoir intérieur (1) pour accueillir un carburant cryogénique, un réservoir extérieur (2) pour délimiter un espace d'isolation (3) avec une isolation (4) entre le réservoir intérieur (1) et le réservoir extérieur (2) pour réduire l'apport de chaleur dans le réservoir intérieur (1) et une tubulure de remplissage (5) isolée thermiquement pour accueillir un couplage de ravitaillement (6) côté véhicule, **caractérisé en ce que** le réservoir cryogénique (100) comprend au moins une vanne cryogénique disposée à l'intérieur de la tubulure de remplissage (5) pour diriger le flux de carburant lors du ravitaillement et/ou du prélèvement, laquelle vanne est disposée dans un espace de construction accessible via la tubulure de remplissage (5) et peut être enlevée après le retrait du couplage de ravitaillement (6) côté véhicule.

2. Réservoir cryogénique (100) selon la revendication 1, **caractérisé en ce que** le réservoir cryogénique (100) comprend un clapet antiretour cryogénique (7) pour diriger un flux de carburant liquide ou supercritique lors du ravitaillement depuis une station-service dans le réservoir intérieur (1), dans lequel le clapet antiretour (7) est ouvert lors du ravitaillement.

3. Réservoir cryogénique (100) selon la revendication 1, **caractérisé en ce que** le réservoir cryogénique (100) comprend une vanne de blocage électromécanique cryogénique pour diriger un flux de carburant liquide ou supercritique lors du ravitaillement depuis une station-service dans le réservoir intérieur (1), la vanne d'arrêt électromécanique cryogénique étant ouverte lors du ravitaillement et facultativement lors du prélèvement.

4. Réservoir cryogénique (100) selon la revendication 1, **caractérisé en ce que** le réservoir cryogénique (100) comprend un clapet antiretour cryogénique (7) pour diriger un flux de carburant lors du ravitaillement depuis une station-service dans le réservoir intérieur (1) et un clapet antiretour cryogénique déblocable (17) pour diriger un flux de carburant gazeux lors du ravitaillement depuis le réservoir intérieur (1) vers la station-service, dans lequel le clapet antiretour cryogénique déblocable (17) s'ouvre par une pression en amont du clapet antiretour cryogénique (7) ou suite à un couplage mécanique entre le clapet antiretour cryogénique (7) et le clapet antiretour cryogénique déblocable (17) par une ouverture d'un élément d'étanchéité dans le clapet antiretour cryogénique (7), et dans lequel le clapet antiretour cryogénique (7) et le clapet antiretour cryogénique déblocable (17) sont ouverts lors du ravitaillement.

5. Réservoir cryogénique (100) selon l'une quelconque des revendications 2 à 4,
**caractérisé en ce que**
le réservoir cryogénique (100) comprend une vanne de régulation de pression de réservoir intérieur cryogénique (15) pour diriger le flux de carburant depuis un réservoir intérieur (1) vers un consommateur, dans lequel la vanne de régulation de pression de réservoir intérieur (15) permet un prélèvement de carburant gazeux ou supercritique à une pression de réservoir intérieur supérieure à une pression de commutation définie de la vanne de régulation de pression de réservoir intérieur (15) et dans lequel la vanne de régulation de pression de réservoir intérieur (7) permet un prélèvement de carburant liquide ou supercritique à une pression de réservoir intérieur inférieure à une pression de commutation définie de la vanne de régulation de pression de réservoir intérieur (15).

6. Réservoir cryogénique (100) selon la revendication 2, **caractérisé en ce que** le clapet antiretour cryogénique (7) est conçu pour être poussé dans une position ouverte lors du ravitaillement du réservoir cryogénique (100) en raison d'un différentiel de pression entre la station-service et le réservoir intérieur (1).
